# EUROPEAN PATENT APPLICATION

(11) **EP 4 685 090 A1**
(43) Date of publication of application: **28.01.2026**
(21) Application number: 25190900.8
(22) Date of filing: 22.07.2025
(51) Int. Cl.: B65G 47/14

(54) **AUTOMATIC MACHINE FOR PICKING UP A TOTALITY OF LOOSE PRODUCTS FROM A CONTAINER AND RELATED CONTROL METHOD**

(30) Priority: 22.07.2024 IT 202400016918
(71) Applicant: Bragagni, Rudi, 47522 Cesena (FC) (IT); Calabrese, Alessandra, 40017 San Giovanni in Persiceto (BO) (IT); Calabrese, Francesca, 40012 Calderara di Reno (BO) (IT); Calabrese, Alberto, 40012 Calderara di Reno (BO) (IT)
(72) Inventor: BRAGAGNI, RUDI, 47522 CESENA (FC) (IT); CALABRESE, Emilio, 40012 CALDERARA DI RENO (BO) (IT)
(74) Representative: Studio Torta S.p.A.

(57) **Abstract**

An automatic machine (1) for picking up loose products (2) from a container (3) to be emptied comprising: a collecting station (5) comprising in turn an intermediate support element (6), which is configured to receive and support a portion (7) of loose products (2) transferred from the container (3); an unloading station (8); a control system (9) with at least one sensor element (10) to detect the three-dimensional position of at least some of the products (2); a pick and place system (11) to pick, individually or in groups, loose products (2) from the intermediate support element (6) and to place them at the unloading station (8); a system (12) for shaking or vibrating to move, shake or vibrate the intermediate support element (6); wherein the control system (9) is configured to selectively control the first actuator device (13) as a function of what is detected by the at least one sensor element (10).

## Description

### CROSS-REFERENCE TO RELATED APPLICATIONS

This patent application claims priority from Italian patent application no. 102024000016918 filed on July 22, 2024, the entire disclosure of which is incorporated herein by reference.

### TECHNICAL FIELD

This invention relates to an automatic machine for bin-picking of loose (disordered) products from a container (for example, a box) and its control method.

In particular, this invention is advantageously, but not exclusively intended for use in a robotic island for the picking up, handling, and ordered placing of multiple loose products, such as bushings, to which the following description will explicitly refer without any loss of generality thereby.

### BACKGROUND OF THE INVENTION

Automated systems are known for picking up and placing loose objects from a container using manipulators or robotic arms; this technique is commonly known as bin-picking.

Automated picking up or retrieval from containers containing disordered products (also known as random bin-picking) is an issue of particular concern in the field of robotics and vision systems. In particular, the aim of these systems is to ensure a robot collects known products randomly placed in a container with the help of special vision systems capable of collecting images in the pick-up area.

In recent years, vision systems for bin-picking have greatly evolved, in part thanks to the use of artificial intelligence algorithms that can effectively understand the position and orientation of the objects to be picked up within the container.

Various robotic apparatuses equipped with suction grippers, parallel grippers or any other type of end-effector have therefore been developed to perform the task of taking a product from a disordered source, the container, and depositing the product taken in a predefined manner, that is, with a certain orientation, inside a container or on a special conveyor system for further processing.

However, despite there being multiple solutions on the market, this technology has certain production limitations, which may be due, for example, to the bulkiness of the robot grippers, the geometry of the box (usually parallelepiped-shaped), loose products potentially getting stuck together, or their position not allowing them to be picked up. All of this prevents the robot from being able to empty the container completely, as in the aforementioned cases it is not easy to define a pick-up trajectory for the robot that is certain to be successful.

In general, there is therefore a need to improve the effectiveness of systems for automatically picking up loose products from containers by enabling the entirety (that is, 100 per cent) of the loose products to be picked up at all times.

### DESCRIPTION OF THE INVENTION

The purpose of this invention is to provide an automatic machine for picking up (bin-picking) loose (disordered) products from a container (for example, a box) and a corresponding control method that are at least partially free of the drawbacks described above and, at the same time, are simple and inexpensive to implement.

According to this invention, an automatic machine for picking up (bin-picking) loose (disordered) products from a container (for example, a box) and a related control method are provided as claimed in the independent claims below and, preferably, in any of the claims dependent directly or indirectly on the independent claims.

The claims describe preferred embodiments of this invention forming an integral part of this description.

### BRIEF DESCRIPTION OF THE DRAWINGS

Below, some embodiments of the invention will be described to better understand the same by way of non-limiting example and with reference to the attached drawings wherein:
- Figure 1 is a schematic perspective view, with parts removed for clarity, of a possible embodiment of an automatic machine according to this invention;
- Figure 2 is a perspective, top and schematic view of part of the automatic machine in Figure 1 during a process of emptying a container;
- Figure 3 is a perspective, lower and schematic view of an intermediate support element and an associated actuator device for shaking it or making it vibrate;

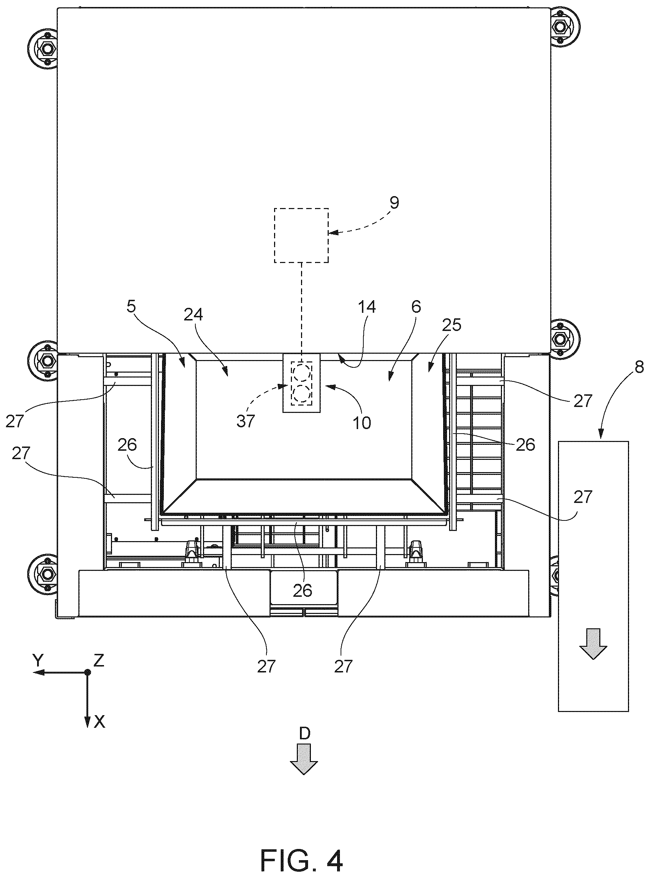

- Figure 4 is a plan view of the machine in Figure 1 with details removed for greater clarity;
- Figure 5 is a close-up perspective view of the embodiment in Figure 2; and
- Figure 6 is a detail of Figure 5.

### EMBODIMENTS OF THE INVENTION

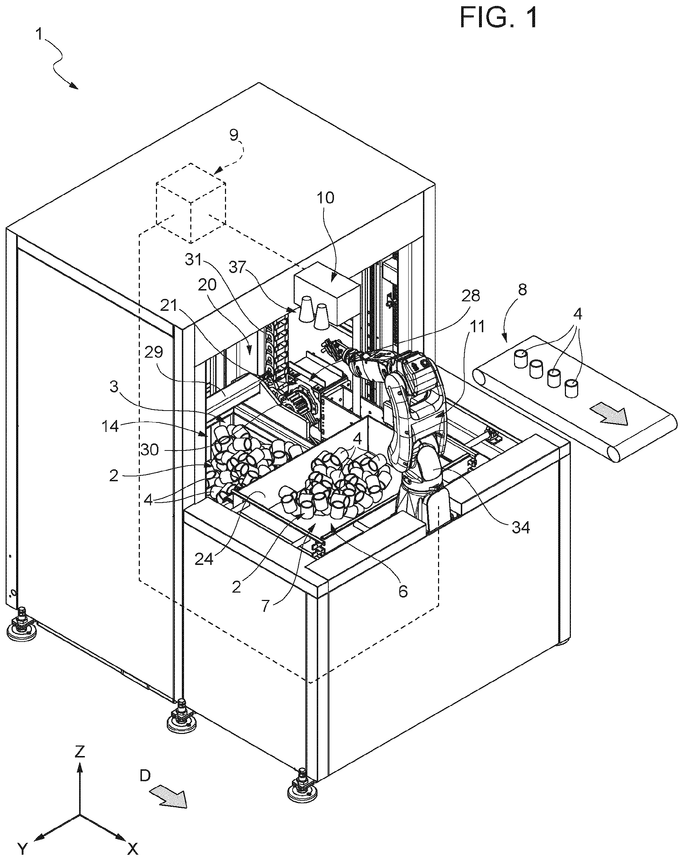

In Figure 1, the reference number 1 denotes, as a whole, an automatic machine for picking up loose products 2 from a container 3 to be emptied.

The same reference numbers and letters in the figures identify the same elements or components with the same function.

In the context of the present description the term "second" component does not imply the presence of a "first" component. These terms are in fact used as tags to improve clarity and should not be understood in a limiting way.

The elements and features disclosed in the various preferred embodiments, including the drawings, may be combined with or isolated from one another without however departing from the scope of protection of the present application as described below.

It should be specified that, below in this description, expressions such as "above", "below", "in front of", "behind" and the like are used with reference to the normal arrangement of the machine 1 on a horizontal floor.

As illustrated in the non-limiting embodiment in Figure 1, it is also possible to define:
- a longitudinal axis X integral with the machine 1 and arranged, in use, along a forward direction D of the loose products;
- a transverse axis Y integral with the machine 1 and arranged, in use, horizontal and orthogonal to the axis X; and
- a vertical axis Z, integral with the machine 1 and arranged, in use, vertical and orthogonal to the axes X, Y.

In the non-limiting embodiments in the attached figures, the loose products are bushings 4. However, the following remains valid for any type of loose product 3 to be taken from a disordered set (for example, from inside the container 3) to be arranged in an orderly manner. In particular, the container 3 is a so-called "box", for example made of plastic or metal.

The automatic machine 1 comprises a collecting station 5 that comprises, in turn, an intermediate support element 6, which is configured to receive and support a portion 7 of loose products transferred from the container 3. In particular, the intermediate support element 6 is configured in such a way that it can contain the aforementioned portion 7 of loose products 2 coming from the container 3 inside. More specifically, a second portion of loose products 2 remains, during emptying, momentarily in the container 3 and is reduced as emptying proceeds to the benefit of the portion, which is replenished with loose products 2 as they are processed.

The automatic machine 1 also comprises an unloading station 8, of a known type and therefore not described in further detail, which is configured to receive the products 2 in an orderly manner, whether individually or in groups.

In particular, since the loose products 2 are bushings 4, certain devices that follow have been adopted precisely to cope with the ability of these loose products 2 to get stuck together in complex configurations.

The automatic machine 1 also comprises a control system 9, which comprises at least one sensor element 10 that is configured to detect the position (in spatial coordinates) and the orientation in three-dimensional space XYZ of at least some of the products 2 of the portion 7 of loose products 2 arranged on the intermediate support element 6.

In addition, the automatic machine 1 comprises a pick and place system 11, which is configured to pick up, individually or in groups, the loose products 2 from the intermediate support element 6 and to place the same products 2 picked up in an ordered manner at the unloading station 8.

Advantageously, the collecting station 5 further comprises a shaking or vibrating system 12, which comprises at least one first actuator device 13 configured to move, shake or vibrate the intermediate support element 6.

Advantageously, the control system 9 is configured to selectively control the first actuator device 13 as a function of what is detected by the sensor element 10. Thus, if the control system 9 detects the absence of products 2 that can be picked up by the pick and place system 11, the first actuator device 13 is actuated to move the products 2 within the intermediate support element 6 so that they take on a new and different configuration within the intermediate support element 6. At this point, the control system 9 repeatedly continues to check for the absence of pickable products 2 and, if there are some, activates the shaking or vibrating system 12.

In addition, the control system 10 is preferably configured to determine whether at least one of the loose products 2 within the intermediate support element 6 is in a configuration wherein it can be picked up by the pick and place system 11. If this is the case, then the control system 10 is configured to control the pick and place system 11 to pick up the loose products 2 in the pick-up configuration and position them at the unloading station 8.

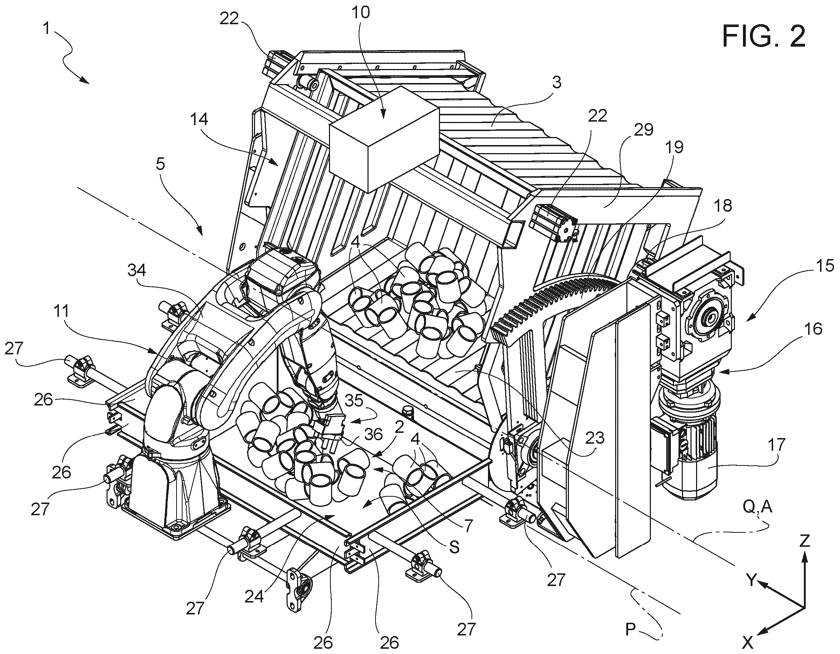

Advantageously, as illustrated in the non-limiting embodiment in Figure 2, the automatic machine 1 also comprises a loading station 14 at which the portion 7 of the loose products 2 is transferred, by dropping, directly from the container 3 to be emptied to the intermediate support element 6 (that is, the portion 7, when dropped, passes from the container 3 to be emptied to the intermediate support element 6 without any further devices or elements altering its conveyance). In particular, the loading station 14 comprises a tilter system 15, which comprises a second actuator device 16 configured to at least rotatably move the container 3 to be emptied so as to transfer, by dropping, the portion 7 of loose products from the container 3 to the intermediate support element 6. In this way, the use of hoppers, buffers or other controlled conveying elements can be avoided, thus improving the efficiency of the automatic machine 1, which no longer requires operators to cyclically empty the contents of a container into the hopper or buffer.

Preferably but without imposing limitations, and as illustrated in the embodiment in Figure 2, the second actuator device 16 comprises an electric motor 17 (possibly provided with a respective reducer), which is mechanically connected to a kinematic mechanism, for example comprising a pinion 18 and an arched rack 19, configured to rotate the container 3 eccentrically about a tilting axis A so as to allow the loose products 2 to fall from the box into the intermediate support element.

Preferably but without imposing limits, as illustrated in the non-limiting embodiment of Figure 1, the loading station 14 also comprises a lifting system 20, which also comprises a third actuator device 21 configured to lift the container 3 to be emptied until it reaches, at the top, a predetermined height Q above a respective height P of the intermediate support element 6.

The second actuator device 16 and the third actuator device 21 are preferably configured to be operated independently of each other, in particular at least partially simultaneously. In particular, the transfer of the loose products 2 from the container 3 to the intermediate support element 6 can be performed by an alternating or even partially simultaneous combination of the movements of the second actuator device 16 and the third actuator device 21.

According to certain preferred but non-limiting embodiments, the loading station 14 also comprises a fourth actuator device 22 arranged at least partially in contact with a surface 23 of the container 3 to be emptied, in particular that surface facing the intermediate support element 6. More specifically, the actuator device 22 is arranged at an edge of the container 23 proximal to the intermediate support element 6. This position allows better control of the fall of the portion 7 of products 2 transferred from the container 3 to the intermediate support element 6.

The fourth actuator device 22 is preferably configured to make at least part of the container 3 to be emptied vibrate so as to assist the transfer of the portion 7 of loose products from the container 3 to the intermediate support element 6. In other words, the fourth actuator device 22 avoids the need to move at least one of either the second actuator device 16 or the third actuator device 21. In fact, by vibrating the surface 23, it is possible to transfer a controlled portion of loose products 2 by dropping them from the container 3 to the intermediate support element 6. In this way, the transfer of loose products 2 from the container 3 to the intermediate support element 6 can be controlled more accurately and/or gently.

According to the non-limiting embodiments illustrated in the accompanying figures, the intermediate support element 6 comprises a tray 24 provided with a main surface S configured to contact the portion 7 of loose products. In particular, the main surface S comprises one or more concavities 25. For example, two concavities could be arranged side by side along the axis Y in order to create two or more groups of loose products 2 and thus subdivide the portion 7 into several parts.

Preferably but without imposing limits, the intermediate support element 6 has no vertical side walls at the edges of the tray 24. In other words, the intermediate support element 6 does not have a purely box-like, that is parallelepipedal, shape but opens out at the top. This prevents some of the loose products 2 from getting stuck in the corners at a right angle, making it easier for the pick and place system 11 to grip them.

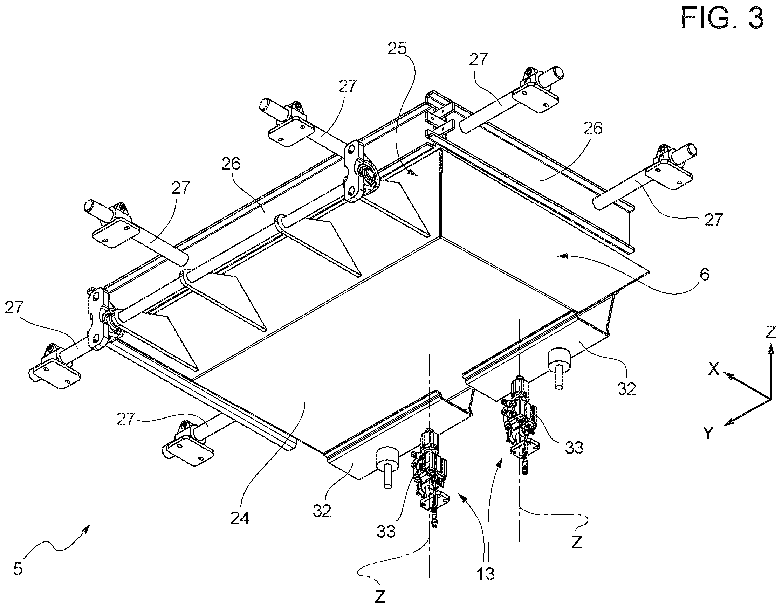

In particular, as illustrated in Figure 3, which shows a view of the tray 24 from below, the latter is preferably but without imposing limits delimited by separate vertical bulkheads 26, which can be adjusted by means of parallel, criss-crossing guides 27 at the corners of the tray 24. More specifically, therefore, the intermediate support element 6 has no side walls running transversely to the support plane for loose products 2, either vertically or inclined, as the bulkheads are separated from it. This generates a relative movement between the separate bulkheads 26 and the tray 24. This relative movement avoids stalled situations in which loose products 2 get stuck in the corners that would be present and not relatively mobile if the tray had integrated side walls.

Advantageously but without imposing limits, the lifting system 20, thus the third actuator device 21, comprises a respective electric motor 28 that is mechanically connected to a support frame 29 of the container 3. The support frame 29 is preferably mechanically connected to the actuator device 21 via a pinion 30 and a respective chain 31 (or via any other kinematic mechanism or transmission element).

According to some non-limiting embodiments, like the one illustrated in Figure 3, the first actuator device 13 is connected to the intermediate support element 6 via a flange 32 arranged at one of the edges of the support element 6. In particular, the flange 32 can be single or multiple, depending on the number of actuators comprised in the first actuator device.

Preferably but without imposing limits, the first actuator device 13 comprises one or two pneumatic cylinders 33 (in particular connected to the flange 32 and arranged to move parallel to each other). In other non-limiting cases, the first actuator device 13 comprises motors, cylinders or a combination of these. Specifically, but without imposing limits, the cylinders 33 are simultaneously actuated. If greater turbulence is desired, the cylinders 33 can be operated in a staggered manner.

In some non-limiting examples, the impulsive motion of the first actuator device 13 causes the intermediate support element 6 to rotate about a horizontal rotation axis B, preferably parallel to the axis Y.

Advantageously but without imposing limits, the first actuator device 13 is configured to cause a (impulsive) jerking movement (that is, along the axis Z) and/or a momentary tilting of the intermediate support element 6.

In particular, the first actuator device 13 (for example, the cylinders 33) travels (along the vertical axis Z) 5 mm or more, more specifically 10 mm.

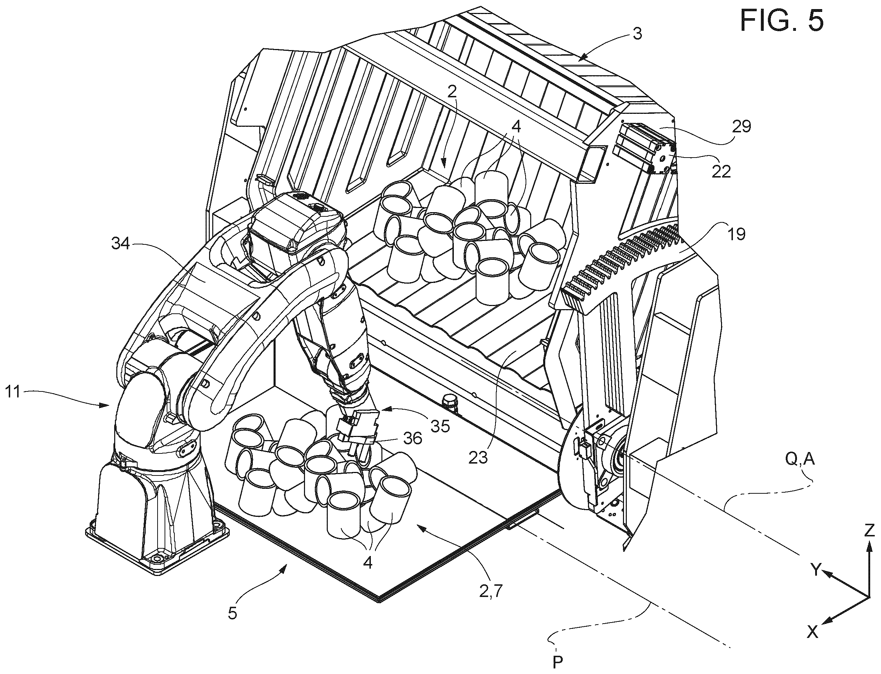

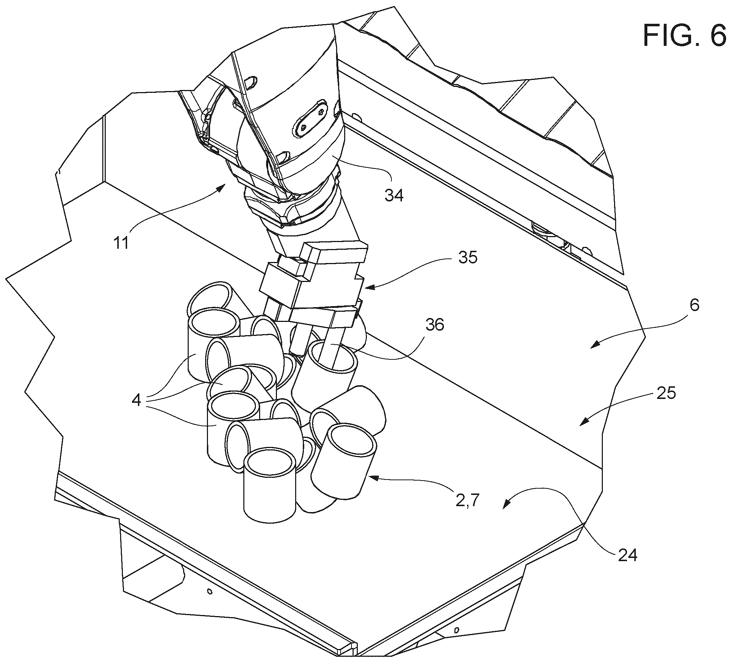

In certain non-limiting examples, such as those illustrated in Figures 1, 2, 5 and 6, the pick and place system 11 comprises a robotic arm 34, in particular an anthropomorphic one, equipped with an end effector 35 provided with a gripper element 36 (of a known type not described in further detail below).

Advantageously but without imposing limits, the sensor element 10 comprises a stereo-camera 37 arranged (downwards) to frame the intermediate support element 6, in particular so that its vertical projection falls entirely within the intermediate support element 6. In other words, the stereo-camera 37 is arranged above the intermediate support element 6. In this way, the position and orientation in three-dimensional space of the loose products 2 within the intermediate support element 6 can be determined, making it possible to understand if and when it is necessary to operate the shaking or vibrating system 12 to change the configuration of the loose products 2 within the intermediate support element 6. In this way, it is possible to separate stuck products and/or dislodge some of them from configurations that do not allow the pick and place system 11 to grip them.

In accordance with another aspect of this invention, a control method for an automatic machine 1 for picking up loose products 2 from a container 3 to be emptied is described.

The method is preferably carried out using the automatic machine 1 described above.

The method comprises the steps of:
- transferring, at the loading station 14, a portion 7 of the loose products 2 from the container 3 to an intermediate support element 6;
- detecting, by means of the control system 9 provided with the sensor element 10, the position and orientation in three-dimensional space XYZ of at least some of the products 2 of the portion 7 of loose products arranged on the intermediate support element 6;
- picking up, by means of the pick and place system 11, individually or in groups, the loose products 2 from the intermediate support element 6; and
- positioning the same products 2 picked up in an orderly manner at an unloading station, again by means of the pick and place system 11.

The control method also comprises the steps of:
- determining, prior to the picking-up step, whether at least one of the loose products 2 within the intermediate support element 6 is in a configuration wherein it can be picked up by the pick and place system 11;
- controlling the shaking or vibrating system 12 to move, shake or vibrate the intermediate support element 6 if there are no loose products 2 in a configuration in which they can be picked up by the pick and place system 11.

Preferably but without imposing limits, in accordance with what has been mentioned above, the shaking or vibrating system 12 moves the intermediate support element 6 with a jerking or oscillating motion around a horizontal axis B.

In some preferred, but non-limiting examples, the method also comprises an additional step of processing, using the control system 9 (which may comprise, physically, one or more known electronic control units), as a function of what is detected by the sensor element 10, in case there is at least one loose product 2 in a configuration wherein it can be picked by the pick and place system 11, an appropriate trajectory to be imparted to the pick and place system 11 to pick up the at least one loose product 2 from the intermediate support element 6 and place it in a predefined manner at an unloading station 8.

In other words, in use, the sensor element 10 detects the position and orientation in three dimensions of at least one product 2 within the intermediate support element 6 and the control system 9 processes, depending on what is detected and the structure of the robotic arm 34, a gripping trajectory by which the robotic arm 34 is controlled by the control system 9 so as to pick up and position in the unloading station 8.

In accordance with the above, the method preferably also involves a tilting step at least partially preceding the step of transferring, during which the container 3 to be emptied is at least rotatably moved (about the horizontal axis A) so as to transfer, by dropping, the portion 7 of loose products 2 from the container 3 to the intermediate support element 6.

In addition, advantageously but without imposing limits, the method comprises a lifting step, preceding the transferring step, during which the container 3 to be emptied is lifted (by the lifting system 20) until it reaches at the top a predefined height Q above the respective height P of the intermediate support element 6.

In some non-limiting examples, the method also involves a step of at least partially vibrating the container 3 to be emptied (by means of the fourth actuator device 22 arranged at the open face of the container 3) so as to assist the transfer of the portion 7 of loose products 2 from the container 3 to the intermediate support element 6.

Preferably but without imposing limits, the automatic machine 1 can be connected to a network of machines of the same type (in particular divided by type of product to be picked up), allowing data to be shared on the acquisition by the sensor element 10 of images relating to the loose products 2, thus permitting the development of a common database and a self-learning algorithm, so as to improve the quality and reliability of the pick and place system 11 and optimise the movements of the robotic arm 34. Thus, the emptying of 100 per cent of container 3 is further improved.

Although the invention described above makes particular reference to a very specific embodiment, it is not to be considered limited to that embodiment, since it encompasses all those variants, modifications, or simplifications covered by the attached claims, such as, for example: a different kind of pick and place system (for example, a SCARA, a delta robot, etc.), a different configuration of the intermediate support element 6, different actuator devices having the same function, etc.

The machine and method described above have numerous advantages.

First of all, they ensure total emptying of the container 3. In fact, one of the great limitations of bin-picking lies in the impossibility of completely emptying the container, precisely because some products are located in the corners of the container or get stuck to each other. By means of the shaking or vibrating system, the products stuck together or located at the edges are quickly repositioned until they achieve a configuration compatible with being gripped by the pick and place system. In this way, it is possible to ensure the withdrawal of the entirety, that is, 100 per cent, of the products contained in the container 3.

At the same time, they also allow the container 3 to be positioned at the loading station 14, which will lift and tip it so that it can be emptied completely. This also increases the safety of operators, as they no longer have to be concerned with the controlled lifting and tipping of the container 3.

Finally, the three-dimensional view of the sensor element 10 makes it possible to recalculate, at each shake, or at each grip of the robotic arm (if one wants to consider the possible displacement of products adjacent to the one picked up), the trajectory that the robotic arm will have to follow for the next grip.

### LIST OF REFERENCE NUMBERS IN THE FIGURES

- 1: machine
- 2: loose products
- 3: container
- 4: bushings
- 5: collecting station
- 6: intermediate support element
- 7: first portion
- 8: unloading station
- 9: control system
- 10: sensor element
- 11: pick and place system
- 12: system for shaking or vibrating
- 13: first actuator device
- 14: loading station
- 15: tilter system
- 16: second actuator device
- 17: electric motor
- 18: pinion
- 19: rack
- 20: lifting system
- 21: third actuator system
- 22: fourth actuator device
- 23: container surface
- 24: tray
- 25: concavity
- 26: vertical bulkheads
- 27: parallel guides
- 28: electric motor
- 29: support frame
- 30: pinion
- 31: chain
- 32: flange
- 33: pneumatic cylinders
- 34: robotic arm
- 35: end effector
- 36: gripper element
- 37: stereo-camera
- A: tilting axis
- B: rotation axis
- D: loose product forward direction
- P: height of the intermediate support element
- Q: height of the container
- S: main surface
- X: axis
- Y: axis
- Z: axis

## Claims

1. An automatic machine (1) for picking up loose products (2) from a container (3) to be emptied; the automatic machine (1) comprising:
- a collecting station (5) comprising in turn an intermediate support element (6), which is configured to receive and support a portion (7) of loose products (2) transferred from the container (3);
- an unloading station (8), which is configured to receive, individually or in groups, products (2) in an ordered manner;
- a control system (9), which comprises at least one sensor element (10) that is configured to detect the position and orientation in three-dimensional space of at least some of the products (2) of the portion (7) of loose products (2) arranged on the intermediate support element (6);
- a pick and place system (11), which is configured to pick, individually or in groups, loose products (2) from the intermediate support element (6) and to place the same products (2) picked in an ordered manner at the unloading station (8);
- a loading station (14) at which the portion (7) of the loose products (2) is transferred from the container (3) to be emptied to the intermediate support element (6); the loading station (14) comprising a tilter system (15), which comprises a second actuator device (16) configured to at least rotatably move the container (3) to be emptied so as to transfer, by dropping, the portion (7) of loose products (2) from the container (3) to the intermediate support element (6)
wherein the collecting station (5) further comprises a system (12) for shaking or vibrating, which comprises at least one first actuator device (13) configured to move, shake or vibrate the intermediate support element (6);
wherein the control system (9) is configured to selectively control the first actuator device (13) as a function of what is detected by the at least one sensor element (10).

2. The machine (1) according to claim 1, wherein the loading station (14) further comprises a lifting system (20), which further comprises a third actuator device (21) configured to lift the container (3) to be emptied to a predetermined height above a respective height of the intermediate support element (6).

3. The machine (1) according to claim 2, wherein the second actuator device (16) and the third actuator device (21) are configured to be operated independently of each other, in particular at least partially simultaneously.

4. The machine (1) according to any of the previous claims, wherein the loading station (14) comprises a fourth actuator device (22) arranged at least partially in contact with a surface (23) of the container (3) to be emptied, in particular the one facing the intermediate support element (6); the fourth actuator device (22) being configured to let the container (3) to be emptied at least partially vibrate so as to assist the transfer of the portion (7) of loose products (2) from the container (3) itself to the intermediate support element (6).

5. The machine (1) according to any one of the preceding claims, wherein the intermediate support element (6) comprises a tray (24) provided with a main surface configured to contact the portion (7) of loose products (2); wherein the main surface comprises one or more concavities (25).

6. The machine (1) according to claim 5, wherein the intermediate support element (6) has no vertical side walls at the edges of the tray (24).

7. The machine (1) according to any one of the preceding claims, wherein the first actuator device (13) is connected to the intermediate support element (6) via a flange (32) arranged at one of the edges of the support element.

8. The machine (1) according to any one of the preceding claims, wherein the first actuator device (13) is configured to cause a jerking movement and/or a momentary tilt of the intermediate support element (6); in particular, the first actuator device (13) travels a stroke of 5 mm or more, more specifically 10 mm or more.

9. The machine (1) according to any one of the preceding claims, wherein the actuator first device (13) comprises a pair of pneumatic cylinders (33).

10. The machine (1) according to any one of the preceding claims, wherein the pick and place system (11) comprises a robotic arm (34), in particular an anthropomorphic one, provided with an end effector (35) comprising a gripper element (36).

11. The machine (1) according to any one of the preceding claims, wherein the sensor element (10) comprises a stereo-camera (37) arranged to frame the intermediate support element (6), in particular so that its vertical projection falls entirely within the intermediate support element (6).

12. A control method for an automatic (1) machine for picking loose products (2) from a container (3) to be emptied; the method comprises the steps of:
- transferring, at a loading station (14), a portion (7) of the loose products (2) from the container (3) to an intermediate support element (6);
- detecting, by means of a control system (9) provided with a sensor element (10), the position and orientation in three-dimensional space of at least some of the products (2) of the portion (7) of loose products (2) arranged on the intermediate support element (6);
- picking up, by means of a pick and place system (11), individually or in groups, the loose products (2) from the intermediate support element (6); and
- placing, again by means of the pick and place system (11), the same products (2) taken in an orderly manner at an unloading station (8);
- determining, prior to the stage of picking up, whether at least one of the loose products (2) within the intermediate support element (6) is in a configuration wherein they can be picked by the pick and place system (11);
wherein, if there are no loose products (2) in a configuration wherein they can be picked by the pick and place system (11), the method further comprising the step of controlling a system (12) for shaking or vibrating to move, shake or vibrate the intermediate support element (6);
the method further comprising a tilting step at least partially preceding the step of transferring, during which the container (3) to be emptied is at least rotatably moved so as to transfer, by dropping, the portion (7) of loose products (2) from the container (3) to the intermediate support element (6).

13. The method according to claim 12, wherein the system (12) for shaking or vibrating moves the intermediate support element (6) with a jerking or oscillating motion around a horizontal axis (B).

14. The method according to any one of claims 12 and 13 and comprising a further step of processing, as a function of what is detected by the sensor element (10), in case there is at least one loose product (2) in a configuration wherein it can be picked by the pick and place system (11), an appropriate trajectory to be imparted to the pick and place system (11) to pick the at least one loose product (2) from the intermediate support element (6) and place it in a predefined manner at an unloading station (8).

15. The method according to any one of claims 12 to 14 and comprising a lifting step, preceding the step of transferring, during which the container (3) to be emptied is lifted to a predetermined height above a respective height of the intermediate support element (6).

16. The method according to any one of claims 12 to 15 and comprising a step of vibrating at least a portion (7) of the container (3) to be emptied so as to assist the transfer of the portion (7) of loose products (2) from the container (3) itself to the intermediate support element (6).
